# EUROPÄISCHE PATENTSCHRIFT

(11) **EP 2 878 460 B1**
(45) Veröffentlichungstag und Bekanntmachung des Hinweises auf die Patenterteilung: **05.12.2018**
(21) Anmeldenummer: 14003211.1
(22) Anmeldetag: 16.09.2014
(51) Int. Cl.: B60D 1/48

(54) **Trägeranordnung für eine Anhängekupplung aus einer Blechplatine und Verfahren zu deren Herstellung**
Carrier assembly for a trailer coupling made from a steel sheet and method for its production
Agencement de support pour un attelage en platine de tôle et son procédé de fabrication

(30) Priorität: 27.11.2013 DE 102013019734
(43) Veröffentlichungstag der Anmeldung: 03.06.2015
(73) Patentinhaber: WESTFALIA - Automotive GmbH, 33378 Rheda-Wiedenbrück (DE)
(72) Erfinder: Angermann, Kay, Dr, 04720 Döbeln (DE)
(74) Vertreter: Patentanwälte Bregenzer und Reule Partnerschaftsgesellschaft mbB

(56) Entgegenhaltungen:
- EP-A1- 2 801 490
- WO-A1-2011/053372
- DE-A1- 19 810 378

## Beschreibung

Die Erfindung betrifft eine Trägeranordnung für eine Anhängekupplung oder einen Lastenträger, mit mindestens einem Tragbauteil, gemäß dem Oberbegriff des Anspruchs 1.

Eine derartige Trägeranordnung ist beispielsweise in WO 2011/053372 A1 erläutert. Eine Trägeranordnung für eine Anhängekupplung oder einen Lastenträger umfasst beispielsweise ein Profilrohr, das hinten quer zur Fahrtrichtung an einem Kraftfahrzeug angeordnet ist. Es ist aber auch üblich, dass man aus Blech, nämlich einer Blechplatine, eine Trägerkonstruktion anfertigt, wobei das Blech entsprechend umgeformt wird, bis es die Konturen des mindestens einen Tragbauteils, beispielsweise des Querträgers und/oder der Seitenträger, annimmt. Durch Presshärten gelingt es, das jeweilige Tragbauteil an die erforderliche Tragfestigkeit anzupassen. Der Vorgang des Presshärtens kann jedoch in manchen Fällen sehr aufwändig sein und beispielsweise auch bei komplizierten Umform-Vorgängen verhindern, dass die Härtung tatsächlich an der richtigen Stelle stattfindet.

Es ist daher die Aufgabe der vorliegenden Erfindung, eine Trägeranordnung mit einem optimalen Festigkeitsverlauf bereitzustellen.

Zur Lösung der Aufgabe ist eine Trägeranordnung gemäß der technischen Lehre des Anspruchs 1 vorgesehen.

Bei dem erfindungsgemäßen Verfahren zur Herstellung einer Trägeranordnung für eine Anhängekupplung oder einen Lastenträger, mit mindestens einem Tragbauteil, das einen Querträger und insbesondere mit dem Querträger verbundene Seitenträger umfasst, wobei die Trägeranordnung zur Montage an einem Heck einer Karosserie eines Fahrzeugs ausgestaltet ist und mindestens eine an dem Querträger angeordnete Halterung für eine Anhängekupplung oder für ein Kupplungsteil eines Lastenträgers, wobei das Verfahren eine Umformung einer Blechplatine an mindestens einer Stelle zur Bildung des mindestens einen Tragbauteils umfasst, ist vorgesehen:
- Enthärten und/oder Härten der Blechplatine insgesamt oder bereichsweise vor der Umformung, so dass die bereichsweise bereits gehärtete und/oder durch den Enthärtungsprozess in ihrer Festigkeit herabgesetzte Blechplatine zu dem mindestens einen Tragbauteil umgeformt worden ist.

Es ist ein Grundgedanke der vorliegenden Erfindung, dass ein möglichst einfach zu bearbeitender Rohling, beispielsweise die Blechplatine oder auch das Vorläufermaterial, nämlich beispielsweise ein Walzband, so gehärtet oder enthärtet wird, dass es optimale Eigenschaften für das später aus ihm gebildete Tragbauteil hat. Diese Behandlung erfolgt bereichsweise oder zonenweise, das heißt zumindest eine erste und eine zweite Zone oder ein erster und ein zweiter Bereich weisen unterschiedliche Härte oder Festigkeit auf. Es ist also vorzugsweise vorgesehen, dass die Blechplatine mindestens zwei durch den Härtungsprozess oder Enthärtungsprozess gebildete Bereiche unterschiedlicher Festigkeit aufweist. Die Enthärtung bzw. der Enthärtungsprozess dienen also dazu, die Festigkeit der Blechplatine und somit des später daraus gefertigten Tragbauteils lokal herabzusetzen.

Es ist beispielsweise vorteilhaft, wenn in einem ersten Bereich später herzustellender Umformungen, beispielsweise Biegekanten oder Rundungen, die Festigkeit des Rohlings oder der Blechplatine geringer ist als in einem zweiten, neben dem ersten Bereich liegenden Bereich des Rohlings oder der Blechplatine, der keiner Umformung oder einer geringeren Umformung zur Herstellung des mindestens einen Tragbauteils unterzogen wird.

Die Blechplatine oder deren Ausgangsmaterial, beispielsweise ein Bandmaterial wird zunächst lokal an kritischen, belasteten Stellen z.B. anhand eines Induktionshärtens oder dergleichen gehärtet oder in der Festigkeit etwas herabgesetzt. Andere, weniger belastete Stellen werden nicht gehärtet oder Stellen, die umgeformt werden müssen, werden in ihrer Festigkeit etwas gesenkt, so dass die Biegefähigkeit zunimmt. Entsprechend eines Kraft- und Spannungsverlaufs sind z.B. bei einem Querträger, der hinten quer an der Karosserie des Kraftfahrzeugs angeordnet ist, in der Regel der mittige Bereich und die Längsendbereiche höher belastet. Dort ist das lokale Härten der Blechplatine oder des Grundmaterials, aus dem die Blechplatine ausgeschnitten wird, vorteilhaft.

Bei dem Tragbauteil handelt es sich beispielsweise um den Querträger und/oder mindestens einen Seitenträger der Trägeranordnung. Es versteht sich, dass das Tragbauteil integral den Querträger und mindestens einen Seitenträger umfassen kann. Der Seitenträger wird beispielsweise mit einem Längsträger der Karosserie des Kraftfahrzeugs verbunden. Bei dem Kraftfahrzeug handelt es sich beispielsweise um einen Personenkraftwagen, insbesondere mit einem Verbrennungsmotor und/oder einem Elektromotor.

Das Blech der Blechplatine oder deren Vorläuferprodukt, beispielsweise einem Kaltband oder Warmband, besteht beispielsweise aus Mangan-Bor-Stahl, vorzugsweise aus einem 22MnB5-Stahl. Es ist auch möglich, dass Dualphasen-Stahl oder Komplexphasen-Stahl verwendet wird.

Die Blechplatine oder das Halbzeug wird also bezogen auf die spätere gewünschte Endstruktur des Tragbauteils zweckmäßigerweise partiell wärmebehandelt oder kältebehandelt oder beides . Dies kann beispielsweise schon geschehen, bevor aus einem Kaltband eine Blechplatine hergestellt wird. Es ist aber auch möglich, dass die bereits aus dem Bandmaterial, aus dem Grundkörper oder aus dem Rohmaterial ausgeschnittene Blechplatine im Sinne der Erfindung einer Härtung oder Enthärtung unterzogen wird. Unter einer Härtung soll verstanden werden, dass die Blechplatine oder deren Vorläufermaterial, beispielsweise das Kaltband, etwas fester ist, jedoch zweckmäßigerweise nicht so fest, dass beispielsweise eine Umformung nicht mehr gelingt. Das Material soll also nicht etwa verspröden, sondern biegefähig bleiben, zumindest im Bereich später auszuformender Rundungen oder Biegungen, um das mindestens eine Tragbauteil der Trägeranordnung herzustellen.

Der Härtungsprozess oder der Enthärtungsprozess umfassen eine auf die zu erzielende Endstruktur bezogene partielle Kältebehandlung oder Wärmebehandlung oder beides. Es ist beispielsweise vorteilhaft, wenn dort, wo die Härtung erwünscht ist, zunächst eine Wärmebehandlung und anschließend eine Kältebehandlung aufeinanderfolgen. Die Kältebehandlung kann unter Druck geschehen, d.h. dass die Blechplatine oder deren Vorläuferprodukt, beispielsweise das Walzmaterial oder Bandmaterial, während der Kältebehandlung gepresst wird oder in sonstiger Weise unter Druck steht. Durch Gefügeveränderungen entsteht die sogenannte Kaltverfestigung, dadurch eine Festigkeitssteigerung. Bei der Wärmebehandlung kann es sich beispielsweise um ein sogenanntes Rekristallisationsglühen handeln.

Die Blechplatine oder deren Vorläufermaterial wird also z.B. dadurch hergestellt, dass vor der Umformung zu dem Tragbauteil nur die festigkeitskritische Stelle z.B. mit Induktion lokal erhitzt und danach mit z.B. einer Wasserbrause abkühlt wird. Dieses Verfahren erzeugt gezielte Gefüge- und Festigkeitsänderung entsprechend der Belastung. Die Blechplatine oder das Tragbauteil müssen also nicht zwingend durch zusätzliche Aufdickungen lokal verstärkt sein.

An dieser Stelle sei aber erwähnt, dass die Blechplatine oder das Tragbauteil durchaus auch Bereiche haben können, die unterschiedliche Bauteilwandstärken haben. Es ist z.B. möglich, dass ein erster Abschnitt der Blechplatine oder des Tragbauteils eine andere Wandstärke hat als ein zweiter Abschnitt des Grundkörpers . Ferner kann der erste und/oder der zweite Abschnitt der Blechplatine oder des Tragbauteils lokal im Sinne der Erfindung gehärtet sein.

Beispielsweise eignet sich Induktionshärten zur Erhöhung der Werkstoffhärte von härtbaren Stählen. Durch das Induktionshärten kann eine harte, lokale Zone oder eine Randzone hergestellt werden, ohne das gesamte Werkstück, z.B. die Blechplatine, durchzuhärten. Die Blechplatine oder deren Vorläufermaterial, zum Beispiel ein Bandmaterial, wird z.B. lokal durch eine Induktionsspule mittels hochfrequentem Wechselstrom rasch erwärmt und nach Erreichen der Härtetemperatur durch Wasser schnell wieder abgekühlt, insbesondere abgeschreckt. So bildet sich in der Randzone, die ausreichend erwärmt wurde, ein Martensitgefüge mit beispielsweise einer Zugfestigkeit von 800 - 1000 N/mm², vorzugsweise sogar über 1500 N/mm², beispielsweise auch nur in Teilbereichen, während ein danebenliegender Bereich der Blechplatine oder deren Vorläufermaterial seine Zugfestigkeit behält. Diese beibehaltene Zugfestigkeit beträgt beispielsweise 400 - 700 N/mm². Diese Zone mit geringer Zugfestigkeit besteht überwiegend aus einem Ferrit-Perlit-Gefüge oder auch aus einem Zwischenstufengefüge.

Das lokale Härten umfasst z.B. Umwandlungshärtung und Härten durch Abschrecken. Zweckmäßig ist ein Anlassen des gehärteten Stahls, beispielsweise der Blechplatine oder des Wandmaterials, aus welchem die Blechplatine vorzugsweise gefertigt bzw. ausgeschnitten ist.

Lokale Härteunterschiede im Tragbauteil können für einen homogenen Kraft - und Spannungsverlauf im Tragbauteil, insbesondere dem Querträger, sorgen.

Das Enthärten umfasst beispielsweise eine Wärmebehandlung, zum Beispiel anhand von Gasflammen, einer induktiven Erwärmung oder dergleichen.

Eine bevorzugte Ausführungsform der Erfindung sieht vor, dass die Blechplatine aus einem Bandmaterial gewonnen ist. Das wurde bereits erwähnt. Das Bandmaterial wird beispielsweise dem Härtungsprozess und/oder dem Enthärtungsprozess unterzogen. Aus dem Bandmaterial wird dann die Blechplatine ausgeschnitten. Somit ist also das Ausgangsmaterial für die Blechplatine bereits optimal in seiner Festigkeit eingestellt.

Die aus dem Blechmaterial oder Bandmaterial ausgeschnittene Blechplatine kann unmittelbar zu dem mindestens einen Tragbauteil umgeformt werden, das heißt das Tragbauteil ist aus dem zuvor hinsichtlich seiner Festigkeit zonenweise oder abschnittsweise vorbehandelten Grundmaterial durch Ausschneiden und Umformen hergestellt worden.

Eine andere Variante sieht vor, dass die Blechplatine aus dem Bandmaterial oder Blechmaterial ausgeschnitten wird, beispielsweise ausgestanzt, mit einer Schere ausgeschnitten oder thermisch herausgetrennt wird, und sodann dem Härtungsprozess und/oder Enthärtungsprozess unterzogen wird, bevor die Umformung zu dem mindestens ein Tragbauteil beginnt.

Bei dem Grundmaterial der Blechplatine handelt es sich vorzugsweise um ein kaltgewalztes Walzmaterial, zum Beispiel Kaltband, das vor der Umformung gehärtet oder enthärtet wird, beispielsweise durch thermisches Härten und Abkühlen. In diesem Zusammenhang hat sich Rekristallisationsglühen als vorteilhaft herausgestellt.

Das kaltgewalzte Walzmaterial ist zweckmäßigerweise aus einem zuvor warmgewalzten Stahl-Halbzeug erhalten.

Das Walzmaterial weist zweckmäßigerweise über seine Querbreite oder seine Länge eine im Wesentlichen konstante Dicke und/oder eine im Wesentlichen konstante Festigkeit auf. Mithin kann also ein Grundmaterial gleicher oder konstanter Dicke durch die erfindungsgemäß partiell erfolgende Härtung oder Enthärtung optimal auf das später durch die Umformung herzustellende Tragbauteil eingestellt werden. Es ist zwar möglich, dass das Walzmaterial oder die Blechplatine unterschiedliche Dicken aufweisen, so dass eine optimale Anpassung an die jeweilige Festigkeit und Tragfähigkeit möglich ist. Das muss aber nicht sein. Durch den erfindungsgemäßen Ansatz kann die Blechplatine oder deren Grundmaterial optimal an die späteren Festigkeitsanforderungen, die an das Tragbauteil gestellt werden, angepasst werden.

Die Bereiche unterschiedlicher Festigkeit der Blechplatine sind zweckmäßigerweise durch den der Umformung vorgelagerten Härtungsprozess oder Enthärtungsprozess gebildet.

Selbstverständlich ist es vorteilhaft, wenn der Härtungsprozess oder Enthärtungsprozess nur bei der Blechplatine oder deren Grundmaterial notwendig ist. Es ist also nicht notwendig, dass das Tragbauteil später noch partiell gehärtet oder enthärtet wird, d.h. dass seine Festigkeitseigenschaften am sozusagen schon umgeformten oder fertigen Tragbauteil nachgearbeitet werden. Es ist aber selbstverständlich auch möglich, dass im Rahmen der Umformung oder nach der Umformung oder beides der Blechplatine insgesamt oder bereichsweise eine weitere Härtung oder Enthärtung stattfindet. Es ist beispielsweise möglich, dass die Blechplatine durch Presshärten oder dergleichen bearbeitet wird, so dass das Festigkeitsverhalten noch weiter optimiert werden kann.

Somit ist eine an den Kraft- und Spannungsverlauf angepasste Trägerstruktur möglich. Es wird weniger Material benötigt, so dass die Trägeranordnung leicht und kostengünstig ist, was z.B. auch Kraftstoff spart. Das erfindungsgemäß hergestellte Tragbauteil ist hochfest, dünnwandig und leicht.

Die Erfindung ermöglicht eine gezielt homogene Einleitung der Kräfte und Momente in die Karosserie.

Ein Querträger ist zweckmäßigerweise mittig höherfest gehärtet und hat nach außen hin einen Verlauf mit geringeren Härten, vorteilhaft analog dem Kraft- und Spannungsverlauf bei Nutzung oder Belastung des Querträgers. Dies ist z.B. durch partielle Kühlung des Tragbauteils oder der Blechplatine nach dem Erwärmen einstellbar.

Nachfolgend werden Ausführungsbeispiele der Erfindung erläutert. Es zeigen:
- Figur 1: eine Draufsicht auf ein Bandmaterial als Ausgangsmaterial für eine in
- Figur 2: dargestellte, noch nicht aus einem Abschnitt des Bandmaterial ausgeschnittene Blechplatine,
- Figur 3: die bereits ausgeschnittene Blechplatine gemäß Figur 2 vor der Umformung,
- Figur 4: ein aus der Blechplatine gemäß Figur 3 hergestelltes Tragbauteil von vorn,
- Figur 5: das Tragbauteil gemäß Figur 4 in perspektivischer Darstellung,
- Figur 6: eine Trägeranordnung mit dem Tragbauteil gemäß Figur 5 in perspektivischer Schrägansicht, und
- Figur 7: eine schematisch dargestellte Pressformung des Tragbauteils gemäß Figuren 4, 5.

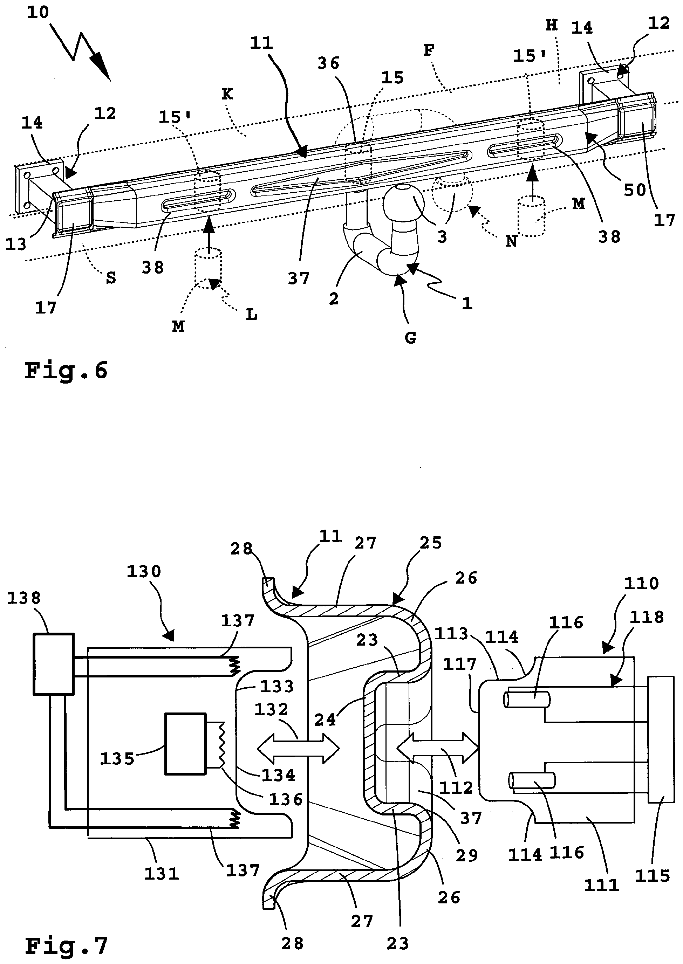

Eine in Figur 6 insgesamt dargestellte Trägeranordnung 10 umfasst einen Querträger 11 sowie diesen jeweils seitlich haltende und an einer Karosserie K eines Kraftfahrzeugs F abstützende Seitenträger 12. Die Seitenträger 12 sind an Längsenden 17 des Querträgers 11 angeordnet. Im am Fahrzeug F montierten Zustand ist die Trägeranordnung 10 vorzugsweise hinter einem Stoßfänger S des Fahrzeugs F verborgen, welcher teilweise und schematisch dargestellt ist.

Beispielsweise sind die Seitenträger 12 an Längsträgern des Fahrzeugs befestigt, zum Beispiel verschraubt. Selbstverständlich könnten auch Seitenträger in der Art von Schwertern vorgesehen sein, die sich seitlich längs der Karosserie K erstrecken. Die Seitenträger 12 umfassen beispielsweise einen Trägerarm 13, der anhand eines Befestigungsflansches 14 mit der Karosserie K verbunden ist, beispielsweise verschraubt.

Im Bereich einer Quermitte des Querträgers 11 ist eine Halterung 15 zur Befestigung einer Anhängekupplung 1 vorgesehen. Die Anhängekupplung 1 umfasst beispielsweise einen Kugelhals 2 und einen Kugelkopf 3 oder ein sonstiges Kuppelelement und ist mit seinem fahrzeugseitigen Ende mit der Halterung 15 verbunden.

Die Halterung 15 umfasst beispielsweise eine Steckaufnahme, in die der Steckvorsprung am freien Ende der Kugelstange einsteckbar ist. Die Halterung 15 kann auch eine Halterung für oder mit einem Schwenklager, Schiebelager oder beidem sein, so dass die Anhängekupplung 1 zwischen der in durchgezogenen Linien dargestellten Gebrauchsstellung G und einer in gestrichelten Linien dargestellten Nichtgebrauchsstellung N verstellbar ist. Die Anhängekupplung 1 könnte aber selbstverständlich auch fest mit der Halterung 15 verbunden, beispielsweise verschraubt, sein oder mit der Halterung 15 auch einstückig sein.

Die Trägeranordnung 10 eignet sich aber auch für beispielsweise einen Lastenträger L, der beispielsweise Kupplungsteile M aufweist, die zum Beispiel an als Steckaufnahmen oder sonstige Kupplungsteile ausgestalteten Halterungen 15' lösbar befestigbar sind. Auch für relativ schwere Lastenträger L eignet sich die Trägeranordnung 10.

Der Querträger 11 ist mit seinen Längsenden 17 mit den Seitenträgern 12 verbunden, beispielsweise an diese angeschweißt. Es wäre aber auch denkbar, einen Querträger vorzusehen, der integral auch Seitenträger oder jedenfalls Verbindungspunkte zur Verbindung mit der Karosserie K aufweist.

An den Längsenden 17 baut der Querträger 11 relativ schmal, während er quer mittig einen größeren Querschnitt aufweist, den man sehr gut in Figur 7 erkennt. Beispielsweise hat der Querträger 11 ein grundsätzlich U-förmiges Profil. Etwa im Bereich einer Quermitte 36, also etwa im Bereich der Halterung 15, befindet sich eine Verstärkungssicke 37. Neben der Verstärkungssicke 37 sind noch zwei weitere Verstärkungssicken 38 vorgesehen, nämlich zwischen der Verstärkungssicke 37 und dem jeweiligen Längsende 17. Die Verstärkungssicke 37 ist beispielsweise rautenförmig, während es sich bei den Verstärkungssicken 38 um beispielsweise U-förmige Vertiefungen handelt. Es ist beispielsweise möglich, dass die Verstärkungssicken 37 auch Durchbrüche umfassen, d.h. dass sie beispielsweise umgebördelte Randbereiche haben, während der Boden der Verstärkungssicke 38 sozusagen fehlen kann. Das dient der Gewichtsersparnis. Jedenfalls verstärken die Verstärkungssicken 37, 38 die Grundstruktur des Querträgers 11 in vorteilhafter Weise.

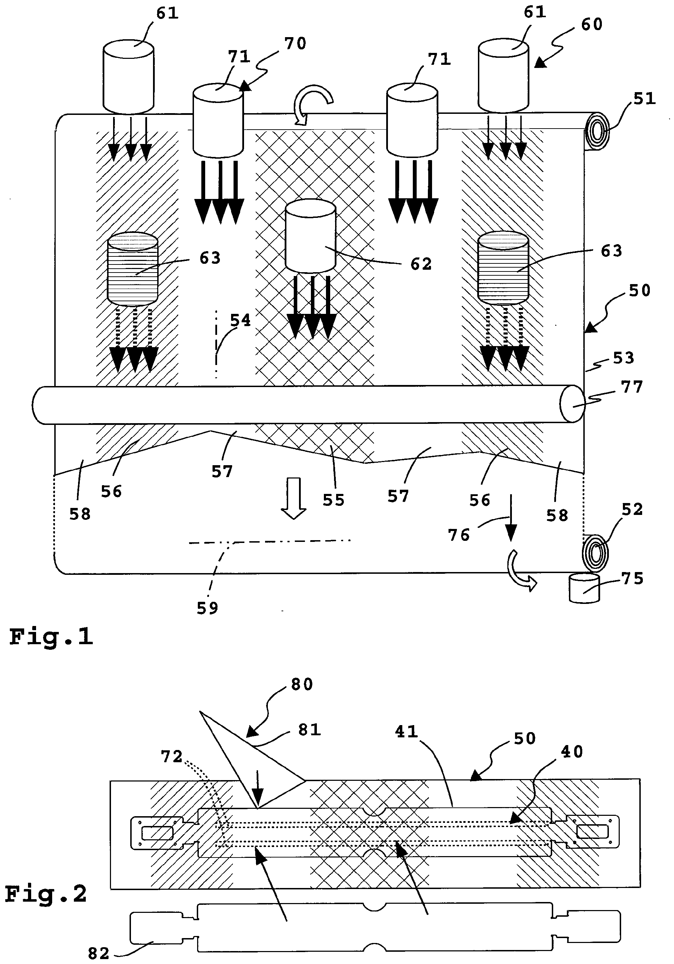

Eine Grundform oder Variante der Trägeranordnung 10 wird in vorteilhafterweise gemäß dem in den Figuren 1, 2, 3 und 4 schematisch dargestellten erfindungsgemäßen Verfahren hergestellt.

Von einem Wickel 51 oder Coil eines Bandmaterials 50 wird beispielsweise eine Länge 53 abgewickelt und anschließend wieder auf einen weiteren Wickel 52 oder Coil aufgewickelt.

Anhand einer Härtungsvorrichtung 60 werden sich in einer Längsrichtung 54 des Bandmaterials 50 erstreckende Bereiche oder Zonen 55, 56 gehärtet. Eine Enthärtungsvorrichtung 70 dient zur Enthärtung bzw. Herabsetzung der Festigkeit von Bereichen oder Zonen 57 des Bandmaterials 50. Die Bereiche oder Zonen 55, 56 und 57 sind über eine Querbreite 59 des Bandmaterials 50 nebeneinander angeordnet, wobei quer äußere Bereiche oder Zonen 58 unbehandelt bleiben, d.h. dass die Härte oder Festigkeit des Bandmaterials 50 so bleibt, wie es beim Abwickeln von dem Wickel 51 ist.

Der Wickel 52 wird beispielsweise von einem Antriebsmotor 75 in einer Förderrichtung 76 angetrieben, so dass das Bandmaterial 50 von dem Wickel 51 abgewickelt wird und an der Härtungsvorrichtung 60 sowie der Enthärtungsvorrichtung 70 vorbeigeführt wird, um das Bandmaterial 50 partiell, insbesondere zonenweise, zu härten oder zu enthärten.

Die Anordnung gemäß Figur 1 kann einen Bestandteil einer Walzanlage bilden. Beispielsweise ist eine Walze 77, insbesondere eine das Bandmaterial 50 mit Druck walzende Walze, vorgesehen, die exemplarisch für weitere Walzen steht, die zum Walzen des Bandmaterials 50 zwischen den Wickeln 51 und 52 dienen können. Die Walzen können primär zur Vorförderung des Bandmaterials 50 dienen, können aber auch zur Nachverfestigung, zur Abkühlung und/oder Erwärmung des Bandmaterials 50 dienen, beispielsweise im Sinne eines Härtens oder Enthärtens, d.h. der Herabsetzung der Festigkeit des Bandmaterials 50.

Das bedeutet allerdings nicht, dass immer Walzen zwischen die nachfolgend erläuterten Behandlungseinrichtungen zur partiellen Härtung oder Enthärtung, d.h. herabsetzende Festigkeit des Bandmaterials 50, vorgesehen sein müssen.

Die Zone 55 bildet dabei eine mittlere Zone, die später der Quermitte 36 des Querträgers 11 zugeordnet ist, die nicht gehärteten bzw. enthärteten Zonen 57 liegen jeweils seitlich neben der mittleren Zone 55 und weisen dieser gegenüber eine geringere Festigkeit auf. Zu den Längsenden 17 hin schließen sich an die Zonen 57 mit geringerer Festigkeit weitere härtere Zonen 56 an, die im Bereich der Anbindung an die Seitenträger 12 eine höhere Festigkeit gewährleisten. Ganz quer außen, d.h. quer außen in Bezug auf die Querbreite 59, befinden sich die Zonen 58 mit ähnlicher Festigkeit oder Härte wie die Zonen 57, sind also "relativ" weich (verglichen mit den gehärteten Zonen 55, 56).

Die Härtungsvorrichtung 60 umfasst beispielsweise eine Temperiereinrichtung 62, die zur Erwärmung der Zone 55 dient. Die Zone 55 ist vorliegend streifenförmig. Die stromabwärts bezüglich der Förderrichtung 76 angeordnete Walze 77 kann beispielsweise das Bandmaterial 50 wieder nach der Erhitzung durch die Temperiereinrichtungen 62 im Bereich der Zone 55 abkühlen, was im Sinne einer Aushärtung der Zone 55 ist. Bei der Temperiereinrichtung 62 kann es sich beispielsweise um eine Spulenanordnung mit induktiven Spulen, um eine Gasflammenanordnung oder dergleichen handeln.

Die Zonen 56 werden dediziert anhand von Temperiereinrichtungen 61 in Bezug auf die Förderrichtung 76 des Bandmaterials 50 zunächst erhitzt, beispielsweise induktiv oder durch elektrische Widerstände, Gasflammen oder dergleichen, und anschließend in der Förderrichtung 76 durch Kühleinrichtungen 63 wieder abgekühlt. Dadurch wird die Zone 56 gegenüber dem Zustand auf dem Wickel 51 härter.

Nun ist das Bandmaterial 50 des Wickels 51 vorzugsweise bereits vorgehärtet, beispielsweise durch Warmwalzen und Kaltwalzen. Um in den Zonen 57 eine beispielsweise zum Einbringen der Verstärkungssicken 38 günstigere geringere Festigkeit zu erzielen, wirkt die Enthärtungsvorrichtung 70 auf das Bandmaterial 50 ein. Die Enthärtungsvorrichtung 70 umfasst eine Temperiervorrichtung 71, welche die Festigkeit des Bandmaterials 50 in der Zone 57 durch Erwärmung herabsetzt, d.h. das Bandmaterial 50 etwas weicher macht. Die Temperiervorrichtung 71 umfasst z.B. eine Wirbelstromheizung.

Das auf den Wickel 52 aufgewickelte Bandmaterial 50 kann dann beispielsweise zu der in Figur 2 dargestellten Schneideinrichtung 80 gebracht werden, um Blechplatinen 40 zuzuschneiden. Es ist aber auch möglich, das Bandmaterial 50 gar nicht erst wieder auf den Wickel 52 aufzuwickeln, sondern direkt der Schneideinrichtung 80 zuzuführen.

Die Schneideinrichtung 80 umfasst beispielsweise ein Schneidmesser 81, eine Stanzeinrichtung oder dergleichen, um eine Außenkontur 41 der Blechplatine 40 aus dem Bandmaterial 50, das zonenweise gehärtet oder enthärtet ist, auszuschneiden, beispielsweise auszustanzen.

Die Schneideinrichtung 80 umfasst beispielsweise das Schneidmesser 81, das entlang der Außenkontur 41 geführt wird. Es ist aber auch beispielsweise möglich, dass eine sozusagen ein Negativ der Außenkontur 41 darstellende Stanzkontur 82 vorgesehen ist, die in das Bandmaterial 50 eingestanzt wird, um die Blechplatine 40 auszustanzen.

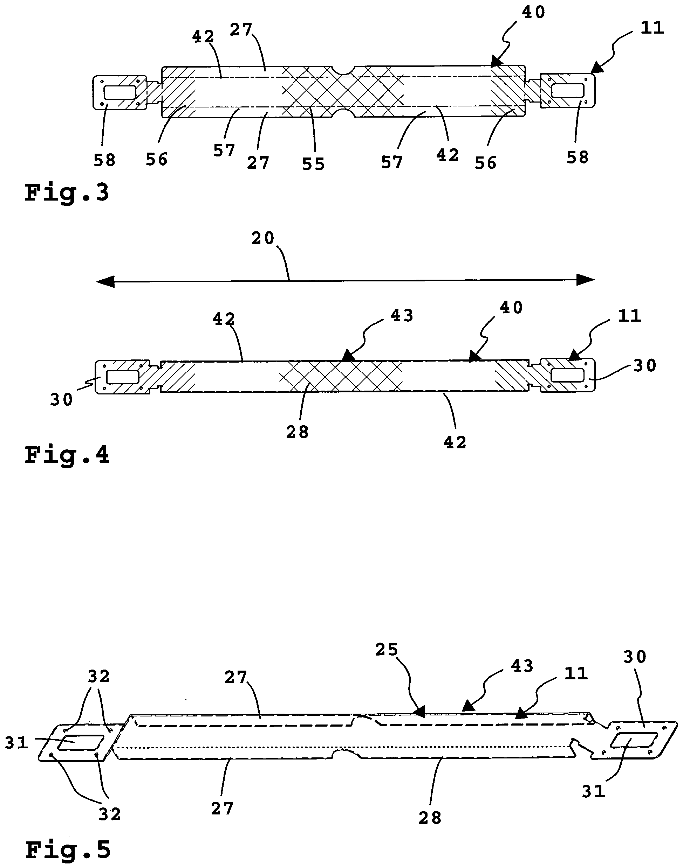

Im Zusammenhang mit dem Ausschneiden der Blechplatine 40, beispielsweise vorher oder nachher (z.B. im Zustand gemäß Figur 3), ist es ebenfalls vorteilhaft, anhand einer Enthärtungsmatrize 72, beispielsweise einer entsprechend beheizten Vorrichtung, im Bereich späterer Biegekanten 42 des Querträgers 11 eine lokale Enthärtung vorzunehmen, beispielsweise im Bereich einer Krümmung 26 des Profils des Querträgers 11.

In Figur 3 sieht man dann die fertig ausgestanzte Blechplatine 40, bei der die Zonen 55-58 wiederum ausgebildet sind, d.h. sie hat in Bezug auf die Querbreite 59 des Bandmaterials 50 bzw. die Querbreite 20 des Querträgers 11 unterschiedliche Festigkeiten oder Härten.

Bei der Darstellung gemäß Figur 4 oder 5 sind dann entlang der Biegekanten 42 von einem Bodenbereich 24 oder einer Grundplatte eines Profils 25 des Querträgers 11 Abschnitte 27 umgebogen, so dass die Blechplatine 40 sozusagen den Querträger 11 bildet, also ein Tragbauteil 43 im Sinne der Erfindung. Diese Umformung wird im Zusammenhang mit Figur 7 noch näher erläutert.

Weitere Nacharbeiten, beispielsweise zusätzliches Härten oder dergleichen, sind nicht notwendig, können aber vorteilhaft sein.

Beispielsweise wird das Profil 25 durch eine Umformungseinrichtung 110 aus der Blechplatine 40 hergestellt, die einen Prägestempel 111 und einen weiteren Prägestempel 131 umfasst, die von einander entgegengesetzten Seiten her, beispielsweise entlang einer Bewegungsrichtung 112, 132 zu der Blechplatine 40 hin bzw. nach der Umformung wieder von dieser weg bewegt werden. Entsprechende Antriebe sind in der Zeichnung nicht dargestellt.

Die Prägestempel 111, 131 haben an ihren Vorderseiten Prägekonturen 113, 133, die mit den auszubildenden Konturen des Profils 25 korrespondieren, sozusagen ein Negativ davon darstellen.

Beispielsweise umfasst die Prägekontur 113 einen Prägevorsprung 117, der mit der Verstärkungssicke 37, also einer Vertiefung, korrespondiert. Der Prägevorsprung 117 läuft mit gebogenen Bereichen 114 aus, so dass die Verstärkungssicke 37 mit Rundungen 29 ausgerundet ist.

Seitliche Abschnitte 23, die von dem Bodenbereich 24 der Verstärkungssicke 37 zur Vorderseite des Querträgers 11 auslaufen, werden von Seitenflanken des Prägevorsprungs 117 und Innenflanken der Prägekontur 133 geformt.

Selbstverständlich ist zur Herstellung der weiteren Konturen des Profils 25, nämlich der Krümmung 26 sowie der Abschnitte 27 und der schließlich nach außen auslaufenden Abschnitte 28 des Profils 25 eine etwas breitere Prägekontur 113 erforderlich, als in der Zeichnung dargestellt. Es können auch weitere Umformwerkzeuge oder Prägewerkzeuge vorgesehen sein.

Gegenüberliegend wirkt der Prägestempel 131 mit seiner Prägekontur 133. Die Prägekontur 133 umfasst eine Vertiefung 134, die die Verstärkungssicke 37 sozusagen aufnimmt, wenn der Prägevorsprung 117 das Profil 25 in Richtung des Prägestempels 131 drückt.

Die Umformungseinrichtung 110 kann die Blechplatine 40 selbstverständlich kalt umformen, d.h. dass die bereits durch die Vorbehandlung der Blechplatine 40 bzw. des Bandmaterials 50 erzielte Festigkeit und Härte, die bereichsweise unterschiedlich ist, durch die Umformung nicht mehr oder jedenfalls nicht mehr wesentlich verändert wird.

Es ist aber auch ein Presshärten möglich, bei dem beispielsweise eine Temperiereinrichtung 118 den Prägestempel 111 temperiert, beispielsweise anhand von Wirbelstromheizungen 116, die durch eine Steuerung 115 angesteuert werden, insbesondere im Bereich des Prägevorsprungs 117 erwärmt.

Es ist auch möglich, dass gegenüberliegend der Prägestempel 131 temperiert wird, beispielsweise anhand von Kühlleitungen 137, die mit einer Kühlquelle 138 verbunden sind, so dass beispielsweise der Bereich der Abschnitte 23 des Profils 25 gekühlt wird.

Ferner kann beispielsweise eine Heizschlange 136 einer Widerstandsheizung 135 den Bodenbereich 24 der Verstärkungssicke 37 in Zusammenwirkung mit der Temperiereinrichtung 118 erwärmen. Die Temperiereinrichtungen 118 und die Widerstandsheizung 135 bewirken eine lokale Verfestigung des Materials des Querträgers 11.

Es ist vorteilhaft, dass im Bereich der Längsenden 17 noch zusätzliche, plattenartige Stützbereiche 30 ausgebildet sind, die zur Abstützung an den Köpfen der Seitenträger 12 dienen. Im Bereich der Stützbereiche 30 kann beispielsweise eine Montageaussparung 31 zum Ein- oder Durchstecken des Seitenträgers 12 vorgesehen sein. Weiterhin sind beispielsweise Schraubbohrungen 32 oder dergleichen zum Anschrauben an dem Seitenträger 12 zweckmäßig. Es versteht sich, dass der Querträger 11 auch als Ganzes direkt an die Karosserie K des Kraftfahrzeugs F angeschraubt werden könnte, das heißt dass die Seitenträger 12 nicht unbedingt notwendig sind.

Bei dem in der Zeichnung dargestellten Querträger 11 sind zwar die folgenden vorteilhaften Maßnahmen nicht dargestellt, sie wären aber möglich:
Beispielsweise können Verstärkungskörper in den Innenraum des Profils 25 eingebracht werden, zum Beispiel Kunststoffkörper oder dergleichen, die eine lokale Verstärkung, insbesondere im Bereich der Quermitte 36 und/oder im Bereich der Längsenden 17, bewirken.

Weiterhin ist es möglich, das Material des Querträgers 11 anhand von beispielsweise einem Fasergewebe oder Fasergelege lokal zu verstärken. Eine partiell vorgesehene Rippenstruktur, beispielsweise anhand eingeklebter Rippenkörper, ist ebenfalls vorteilhaft. Wie gesagt, sind diese vorteilhaften Ausbildungen oder Weiterbildungen der Erfindung keinesfalls auf den konkreten Querträger 11 gemäß der Zeichnung beschränkt, sondern können auch bei anderen erfindungsgemäß aus einer vorgehärteten oder in ihrer Festigkeit lokal reduzierten Blechplatine hergestellten Querträgern oder sonstigen Tragbauteilen realisiert werden.

## Patentansprüche

1. Trägeranordnung für eine Anhängekupplung (1) oder einen Lastenträger (L), mit mindestens einem Tragbauteil (43), das einen Querträger (11) und insbesondere mit dem Querträger (11) verbundene Seitenträger (12) umfasst, wobei die Trägeranordnung (10) zur Montage an einem Heck einer Karosserie eines Fahrzeugs ausgestaltet ist und mindestens eine an dem Querträger (11) angeordnete Halterung (15, 15') für eine Anhängekupplung (1) oder für ein Kupplungsteil eines Lastenträgers (L) aufweist, wobei mindestens ein Tragbauteil (43) aus einer Blechplatine (40) gebildet ist, die zur Bildung des Tragbauteils (43) an mindestens einer Stelle durch eine Umformung bearbeitet ist, **dadurch gekennzeichnet, dass** die Blechplatine (40) vor der Umformung bereichsweise einem Härtungsprozess und/oder einem Enthärtungsprozess unterzogen worden ist, so dass die bereichsweise bereits gehärtete oder durch den Enthärtungsprozess in ihrer Festigkeit herabgesetzte Blechplatine (40) zu dem mindestens einen Tragbauteil (43) umgeformt worden ist, wobei der Härtungsprozess und/oder der Enthärtungsprozess eine auf die zu erzielende Endstruktur bezogene partielle Kältebehandlung oder Wärmebehandlung umfasst.

2. Trägeranordnung nach Anspruch 1, **dadurch gekennzeichnet, dass** die Blechplatine (40) aus einem Bandmaterial (50) gewonnen ist, das dem Härtungsprozess und/oder dem Enthärtungsprozess unterzogen worden ist und aus dem die Blechplatine (40) ausgeschnitten worden ist.

3. Trägeranordnung nach Anspruch 2, **dadurch gekennzeichnet, dass** die aus dem Bandmaterial (50) ausgeschnittene Blechplatine (40) unmittelbar zu dem mindestens einen Tragbauteil (43) umgeformt worden ist oder vor der Umformung zu dem mindestens einen Tragbauteil (43) einem weiteren Härtungsprozess und/oder einem Enthärtungsprozess unterzogen worden ist.

4. Trägeranordnung nach einem der vorhergehenden Ansprüche, **dadurch gekennzeichnet, dass** die Blechplatine (40), insbesondere das Grundmaterial oder Bandmaterial (50) der Blechplatine (40), aus einem kaltgewalzten Walzmaterial, insbesondere Kaltband, gewonnen ist, das vor der Umformung, insbesondere durch thermisches Härten und Abkühlen gehärtet wurde.

5. Trägeranordnung nach Anspruch 4, **dadurch gekennzeichnet, dass** das kaltgewalzte Walzmaterial aus einem zuvor warmgewalzten Stahl-Halbzeug erhalten ist.

6. Trägeranordnung nach einem der vorhergehenden Ansprüche, **dadurch gekennzeichnet, dass** das Bandmaterial (50) oder die Blechplatine (40), über seine oder ihre Querbreite und/oder seine oder ihre Länge eine im Wesentlichen konstante Dicke und/oder eine im Wesentlichen konstante Festigkeit aufweist.

7. Trägeranordnung nach Anspruch 6, **dadurch gekennzeichnet, dass** die Bereiche (55-58) unterschiedlicher Festigkeit durch den der Umformung vorgelagerten Härtungsprozess oder Enthärtungsprozess gebildet sind.

8. Trägeranordnung nach einem der vorhergehenden Ansprüche, **dadurch gekennzeichnet, dass** das mindestens eine Tragbauteil (43) bei Umformung oder nach der Umformung der Blechplatine (40) bereichsweise einem Härtungsprozess und/oder einem Enthärtungsprozess unterzogen worden ist, insbesondere einer Presshärtung.

9. Trägeranordnung nach einem der vorhergehenden Ansprüche, **dadurch gekennzeichnet, dass** die Blechplatine (40) mindestens zwei durch den Härtungsprozess oder Enthärtungsprozess gebildete Bereiche (55-58) unterschiedlicher Festigkeit aufweist, wobei ein insbesondere linienförmiger Bereich geringerer Festigkeit im Bereich (55-58) einer späteren durch die Umformung hergestellten Biegekante oder Rundung des Tragbauteils (43) vorgesehen ist.

10. Verfahren zur Herstellung einer Trägeranordnung (10) für eine Anhängekupplung (1) oder einen Lastenträger (L), mit mindestens einem Tragbauteil (43), das einen Querträger (11) und insbesondere mit dem Querträger (11) verbundene Seitenträger (12) umfasst, wobei die Trägeranordnung (10) zur Montage an einem Heck einer Karosserie eines Fahrzeugs ausgestaltet ist und mindestens eine an dem Querträger (11) angeordnete Halterung (15, 15') für eine Anhängekupplung (1) oder für ein Kupplungsteil eines Lastenträgers (L), wobei das Verfahren eine Umformung einer Blechplatine (40) an mindestens einer Stelle zur Bildung des mindestens einen Tragbauteils (43) umfasst, **gekennzeichnet durch**:
- Enthärten und/oder Härten der Blechplatine (40) bereichsweise vor der Umformung, so dass die bereichsweise bereits gehärtete und/oder durch den Enthärtungsprozess in ihrer Festigkeit herabgesetzte Blechplatine (40) zu dem mindestens einen Tragbauteil (43) umgeformt worden ist.

## Claims

1. Support assembly for a trailer coupling (1) or a load carrier (L), with at least one carrier part (43) which includes a cross-member (11) and in particular side members (12) connected to the cross-member (11), wherein the support assembly (10) is designed for fitting to a rear section of a body of a vehicle and has fitted to the cross-member (11) at least one mounting (15, 15') for a trailer coupling (1) or for a coupling part of a load carrier (L), wherein at least one carrier part (43) is made from a sheet metal blank (40) which, to form the carrier part (43), is processed by forming at one or more points, **characterised in that** before forming the sheet metal blank (40) is subjected in certain areas to a hardening process and/or a softening process, so that the sheet metal blank (40) already hardened in certain areas or with reduced strength due to the softening process is formed into the carrier part or parts (43), wherein the hardening process and/or the softening process include partial cold treatment or heat treatment based on the end structure to be obtained.

2. Support assembly according to claim 1, **characterised in that** the sheet metal blank (40) is obtained from strip material (50) which has been subjected to the hardening process and/or the softening process and has been cut out of the sheet metal blank (40).

3. Support assembly according to claim 2, **characterised in that** the sheet metal blank (40) cut out of the strip material (50) is directly formed into the carrier part or parts (43), or has been subjected to a further hardening process and/or softening process before forming into the carrier part or parts (43).

4. Support assembly according to any of the preceding claims, **characterised in that** the sheet metal blank (40), in particular the base material or strip material (50) of the sheet metal blank (40), is obtained from a cold-rolled rolling material, in particular cold strip, which has been hardened before forming, in particular by thermal hardening and cooling.

5. Support assembly according to claim 4, **characterised in that** the cold-rolled rolling material is obtained from a previously hot-rolled steel semi-finished product.

6. Support assembly according to any of the preceding claims, **characterised in that** the strip material (50) or the sheet metal blank (40) has over its lateral width and/or its length a substantially constant thickness and/or a substantially constant strength.

7. Support assembly according to claim 6, **characterised in that** the areas (55-58) of differing strength are formed by the hardening process or softening process preceding forming.

8. Support assembly according to any of the preceding claims, **characterised in that** the carrier part or parts (43), during or after forming of the sheet metal blank (40), has or have been subjected in certain areas to a hardening process or a softening process, in particular press hardening.

9. Support assembly according to any of the preceding claims, **characterised in that** the sheet metal blank (40) has at least two areas (55-58) of differing strength formed by the hardening process or softening process, wherein an area of lower strength, in particular linear, is provided in the area (55-58) of a bending edge or rounding of the carrier part (43) produced subsequently during forming.

10. Method of producing a support assembly for a trailer coupling (1) or a load carrier (L), with at least one carrier part (43) which includes a cross-member (11) and in particular side members (12) connected to the cross-member (11), wherein the support assembly (10) is designed for fitting to a rear section of a body of a vehicle and has on the cross-member (11) at least one mounting (15, 15') for a trailer coupling (1) or for a coupling part of a load carrier (L), wherein the method includes forming of a sheet metal blank (40) at one or more points to form the carrier part or parts (43), **characterised by**:
- softening and/or hardening of the sheet metal blank (40) in certain areas before forming, so that the sheet metal blank (40), already hardened in certain areas and/or reduced in strength by the softening process, is formed into the carrier part or parts (43).

## Revendications

1. Ensemble de support pour un attelage de remorque (1) ou un support de charges (L), avec au moins un composant porteur (43), qui comprend une traverse (11) et des supports latéraux (12) reliés en particulier à la traverse (11), dans lequel l'ensemble de support (10) est configuré aux fins du montage au niveau d'un hayon d'une carrosserie d'un véhicule et présente au moins une fixation (15, 15') disposée au niveau de la traverse (11) pour un attelage de remorque (1) ou pour une partie d'attelage d'un support de charges (L), dans lequel au moins un composant porteur (43) est formé à partir d'une platine en tôle (40), qui est usinée par un façonnage pour former le composant porteur (43) au niveau d'au moins un emplacement, **caractérisé en ce que** la platine en tôle (40) a été soumise avant le façonnage par endroits à un processus de durcissement et/ou à un processus d'adoucissement si bien que la platine en tôle (40) déjà durcie par endroits ou présentant une solidité réduite du fait du processus d'adoucissement a été façonnée en l'au moins un composant porteur (43), dans lequel le processus de durcissement et/ou le processus d'adoucissement comprend un traitement à froid ou un traitement à chaud partiel concernant la structure finale à obtenir.

2. Ensemble de support selon la revendication 1, **caractérisé en ce que** la platine en tôle (40) est obtenue à partir d'un matériau en bande (50), qui a été soumis au processus de durcissement et/ou au processus d'adoucissement et duquel la platine en tôle (40) a été découpée.

3. Ensemble de support selon la revendication 2, **caractérisé en ce que** la platine en tôle (40) découpée du matériau en bande (50) a été façonnée directement en l'au moins un composant porteur (43) ou a été soumise à un autre processus de durcissement et/ou à un processus d'adoucissement avant le façonnage en l'au moins un composant porteur (43).

4. Ensemble de support selon l'une quelconque des revendications précédentes, **caractérisé en ce que** la platine en tôle (40), en particulier le matériau de base ou le matériau en bande (50) de la platine en tôle (40), est obtenue ou obtenu à partir d'un matériau de laminage laminé à froid, en particulier d'une bande froide, qui a été durcie avant le façonnage en particulier par un durcissement thermique et un refroidissement.

5. Ensemble de support selon la revendication 4, **caractérisé en ce que** le matériau de laminage laminé à froid est obtenu à partir d'un semi-produit en acier laminé à chaud au préalable.

6. Ensemble de support selon l'une quelconque des revendications précédentes, **caractérisé en ce que** le matériau en bande (50) ou la platine en tôle (40) présente sur sa largeur transversale et/ou sa longueur, une épaisseur sensiblement constante et/ou une solidité sensiblement constante.

7. Ensemble de support selon la revendication 6, **caractérisé en ce que** les zones (55 - 58) à solidité différente sont formées par le processus de durcissement ou le processus d'adoucissement ayant lieu en amont du façonnage.

8. Ensemble de support selon l'une quelconque des revendications précédentes, **caractérisé en ce que** l'au moins un composant porteur (43) a été soumis lors du façonnage ou après le façonnage de la platine en tôle (40) par endroits à un processus de durcissement et/ou à un processus d'adoucissement, en particulier à un durcissement à la presse.

9. Ensemble de support selon l'une quelconque des revendications précédentes, **caractérisé en ce que** la platine en tôle (40) présente au moins deux zones (55 - 58) formées par le processus de durcissement ou le processus d'adoucissement à solidité différente, dans lequel une zone en particulier de forme linéaire à solidité inférieure est prévue dans la zone (55 - 58) d'une arête de cintrage ou d'un arrondi ultérieure/ultérieur fabriquée/fabriqué par le façonnage.

10. Procédé servant à fabriquer un ensemble de support (10) pour un attelage de remorque (1) ou un support de charges (L), avec au moins un composant porteur (43), qui comprend une traverse (11) et des supports latéraux (12) reliés en particulier à la traverse (11), dans lequel l'ensemble de support (10) est configuré aux fins du montage au niveau d'un hayon d'une carrosserie d'un véhicule, et au moins une fixation (15, 15'), disposée au niveau de la traverse (11), pour un attelage de remorque (1) ou pour une partie d'attelage d'un support de charges (L), dans lequel le procédé comprend un façonnage d'une platine en tôle (40) au niveau d'au moins un emplacement pour former l'au moins un composant porteur (43), **caractérisé par** :
- l'adoucissement et/ou le durcissement de la platine en tôle (40) par endroits avant le façonnage si bien que la platine en tôle (40) déjà durcie par endroits et/ou présentant une solidité réduite du fait du processus d'adoucissement a été façonnée en l'au moins un composant porteur (43).
